## Europäisches Patentamt
## European Patent Office
## Office européen des brevets

(19)

(11) Veröffentlichungsnummer: **0 035 763**
**B1**

(12)

# EUROPÄISCHE PATENTSCHRIFT

(45) Veröffentlichungstag der Patentschrift:
**08.08.84**

(21) Anmeldenummer: **81101600.5**

(22) Anmeldetag: **06.03.81**

(51) Int. Cl.³: **G 01 N 35/02,** B 01 L 11/00,
G 05 D 9/00

(54) **Vorrichtung zur Zuführung abgemessener Mengen eines flüssigen Reagenz zu einem Untersuchungsröhrchen.**

(30) Priorität: **11.03.80 SE 8001913**

(43) Veröffentlichungstag der Anmeldung:
**16.09.81 Patentblatt 81/37**

(45) Bekanntmachung des Hinweises auf die Patenterteilung:
**08.08.84 Patentblatt 84/32**

(84) Benannte Vertragsstaaten:
**CH DE FR GB LI SE**

(56) Entgegenhaltungen:
**CH - A - 495 780**
**DE - A - 2 217 219**
**FR - A - 2 131 584**
**US - A - 3 758 274**
**US - A - 4 029 473**
**US - A - 4 054 416**

(73) Patentinhaber: **CLINICON AB, Box 148,**
**S-161 26 Bromma (SE)**

(72) Erfinder: **Berglund, Erling, Hällvägen 5, S-175 40 Järfälla**
**(SE)**

(74) Vertreter: **Carminger, Lars et al, CARMINGER &**
**UUSITALO PATENTBYRA AB Kungsgatan 38,**
**S-11135 Stockholm (SE)**

**Beschreibung**

Die vorliegende Erfindung betrifft eine Vorrichtung zur Zuführung abgemessener Mengen eines flüssigen Reagenz zu einem offenen Untersuchungsröhrchen in einem klinischen Analysegerät, mit einem offenen Becher für Reagenzflüssigkeit und einer Pumpe, die dazu eingerichtet ist, eine Flüssigkeit in ein Ansaugrohr anzusaugen und ein bestimmtes Flüssigkeitsvolumen aus dem Ansaugrohr wieder zu dispensieren, wobei die Pumpe zwischen einer ersten Position über dem Reagenzbecher und einer zweiten Position über dem Untersuchungsröhrchen bewegbar und absenkbar ausgeführt ist, um in der ersten Position Reagenzflüssigkeit aus dem Reagenzbecher anzusaugen und in der zweiten Position Reagenzflüssigkeit in das Untersuchungsröhrchen zu dispensieren.

Eine derartige Vorrichtung ist bekannt, beispielsweise aus US-A-3 758 274.

In klinischen Analysegeräten, die mit Reagenzversorgungs-Einrichtungen der obengenannten Art versehen sind, sind die Untersuchungsröhrchen häufig in ein Thermostatisierungsbad eingetaucht, das den Inhalt der Untersuchungsröhrchen auf einer für die Reaktion zwischen den Proben und den Reagenzien geeigneten erhöhten Temperatur hält. Die Reagenzflüssigkeit, die der Probe in dem Untersuchungsröhrchen mittels der Meßpumpe aus der Reagenzflüssigkeitsbecher zugeführt wird, sollte dabei vorteilhaft auf diese Temperatur erwärmt sein, bevor sie in das Untersuchungsröhrchen überführt wird, damit die wirksame Reaktionszeit genau kontrolliert werden kann und keine zu lange Aufenthaltsdauer in dem Untersuchungsröhrchen zur Erreichung einer stabilen Temperatur notwendig ist. Es ist deshalb vorteilhaft, wenn auch der Becher mit Reagenzflüssigkeit auf der erhöhten Temperatur gehalten wird. Die Lagerbeständigkeit der üblichen Reagenzflüssigkeiten bei einer derart erhöhten Temperatur ist jedoch beschränkt, und es wäre daher sehr wünschenswert, wenn im Reagenzbecher nur eine kleine Menge Reagenzflüssigkeit bei der erhöhten Temperatur bereitgehalten werden müßte. Dabei entsteht jedoch als ein wesentliches Problem, daß die Reagenzflüssigkeit im Becher, wie sie verbraucht wird, nachgefüllt werden muß, so daß im Reagenzbecher immer eine für eine Reagenzflüssigkeitsüberführung mittels der Meßpumpe vom Reagenzbecher zum Untersuchungsröhrchen ausreichende Menge Reagenzflüssigkeit in Bereitschaft gehalten ist. Würde dieses Problem gelöst, dann könnte der größere Teil der Reagenzflüssigkeit in einem Vorratsgefäß bei einer für eine gute Lagerbeständigkeit der Reagenzflüssigkeit geeigneten niedrigeren Temperatur gehalten werden, beispielsweise in einer Kühlkammer. Dadurch würde es ohne irgendwelche Nachteile auch möglich, das Reagenzvorratsgefäß in der Kühlkammer des Analysegerätes während der Perioden zu belassen, während der das Gerät nicht benutzt wird, beispielsweise über Nacht. Ferner wäre es in einer sehr vorteilhaften Weise möglich, in einem automatisch arbeitenden Analysegerät eine verhältnismäßig große Anzahl von Reagenzbechern für verschiedene Reagenzflüssigkeiten in dem beschränkten Arbeitsbereich einer Meßpumpe unterzubringen, wodurch mit Hilfe einer einzigen Meßpumpe mehrere verschiedene Reagenzflüssigkeiten selektiv auf die Untersuchungsröhrchen übertragen werden könnten.

Aufgabe der vorliegenden Erfindung ist es, ein Reagenzversorgungssystem der eingangs beschriebenen Art zur Verfügung zu stellen, bei dem die oben beschriebenen Probleme gelöst sind.

Erfindungsgemäß wird diese Aufgabe gelöst durch ein Reagenzversorgungssystem der eingangs beschriebenen Art, das gekennzeichnet ist durch ein Vorratsgefäß für Reagenzflüssigkeit, welches mit dem Reagenzbecher über eine Leitung verbunden ist, deren eines Ende in die Flüssigkeit in dem Vorratsgefäß ragt und deren anderes Ende in den Becher öffnet und die ein Rückschlagventil enthält, das einen Flüssigkeitsstrom nur in Richtung auf den Reagenzbecher zuläßt; eine einen Balg und eine Unterdruckquelle aufweisende Einrichtung zur Erzeugung eines Unterdruckes in dem Reagenzbecher zum Ansaugen von Reagenzflüssigkeit aus dem Vorratsgefäß durch die Leitung in den Reagenzbecher hinein, und einen Höhenstandsfühler zum Feststellen des Flüssigkeitsstandes in dem Becher, wobei der Balg an der Pumpe, das Ansaugrohr koaxial umgebend, derart angeordnet ist, daß sich ein dichter Anschluß an den Rand des Reagenzbechers ergibt, wenn die Pumpe mit ihrem Ansaugrohr in den Reagenzbecher abgesenkt ist, und das Innere des Balgs mit der Unterdruckquelle in Verbindung steht, die durch den Höhenstandsfühler derart steuerbar ist, daß sie bei der in den Reagenzbecher abgesenkten Lage der Pumpe eingeschaltet ist und einen Unterdruck in den Reagenzbecher erzeugt, so lange der Flüssigkeitsstand in dem Reagenzbecher einen bestimmten Höchststand unterschreitet.

US-A-4 029 473 beschreibt eine Reagenzversorgungseinrichtung, bei welcher die Reagenzflüssigkeit aus einem Vorratsgefäß in eine geschlossene Zwischenkammer mit Hilfe eines im Vorratsgefäß erzeugten Überdruckes überführt wird. Auch für die weitere Überführung der Reagenzflüssigkeit von der Zwischenkammer zu der Verwendungsstelle wird ein in der Zwischenkammer erzeugter Überdruck verwendet. Diese bekannte Einrichtung kann nicht in Verbindung mit einem offenen Reagenzbecher verwendet werden, von welchem die Reagenzflüssigkeit mit Hilfe einer beweglichen Meßpumpe zu einem Untersuchungsröhrchen zu überführen ist. Ferner erfordert diese bekannte Einrichtung einen sehr genau bestimmten Überdruck.

Die Erfindung und die mit ihr verbundenen Vorteile, sowie zusätzliche bevorzugte Merkmale der Erfindung werden im folgenden anhand einer in der Zeichnung dargestellten Ausführungsform beschrieben. Es zeigt

Fig. 1 eine erfindungsgemäße Reagenzversorgungseinrichtung für ein automatisch betriebenes klinisches Analysegerät teilweise im Schnitt und

Fig. 2 eine bevorzugte Ausführungsform einer Ventileinheit für das in Fig. 1 dargestellte System im Schnitt.

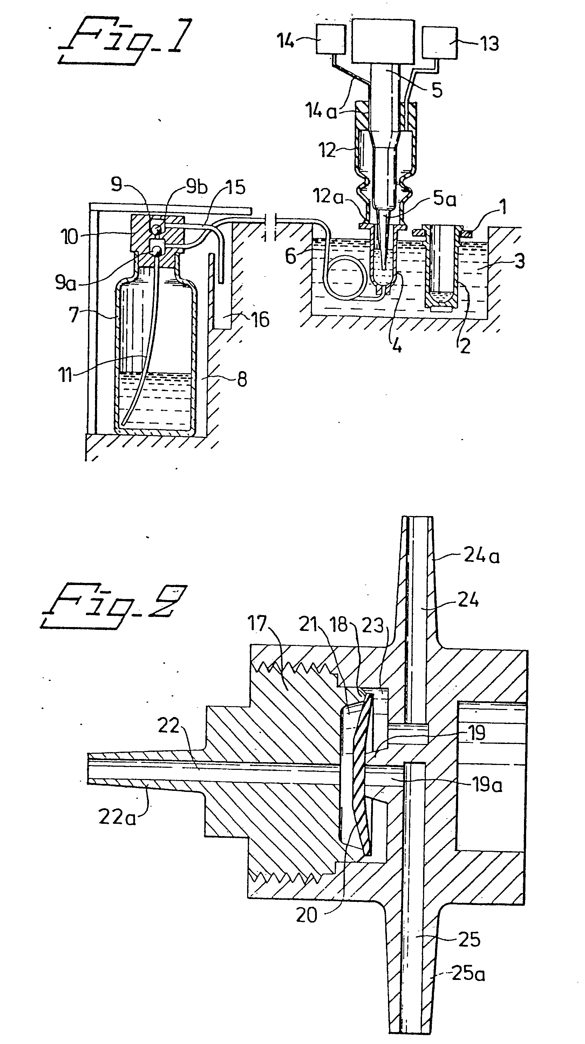

Das klinische Analysegerät, das in Fig. 1 nur teilweise dargestellt ist, weist einen Drehtisch 1 auf, der um eine (nicht dargestellte) vertikale Achse drehbar ist und an dessen Peripherie eine Vielzahl von Löchern vorhanden ist, in denen Untersuchungsröhrchen aufgehängt sind. Die Untersuchungsröhrchen 2 können von dem Drehtisch 1 in eine erste (nicht dargestellte) Zugabestation bewegt werden, an der in die jeweiligen Untersuchungsröhrchen eine Probe eingebracht wird. Danach können sie zu mindestens einer zweiten Zugabestation transportiert werden, die in der Zeichnung schematisch dargestellt ist und dem Zwecke dient, eine gewünschte Reagenzflüssigkeit zu den Proben in den Untersuchungsröhrchen hinzugeben. Schließlich können die Untersuchungsröhrchen zu einer (nicht dargestellten) Meßstation bewegt werden, in der in geeigneter Weise eine bestimmte Eigenschaft der mit dem Reagenz reagiert habenden Proben gemessen wird. Die an dem Drehtisch 1 aufgehängten Untersuchungsröhrchen 2 erstrecken sich in ein Thermostatisierungsbad 3, durch das sie und ihr Inhalt auf einer für die jeweilige Reaktion geeigneten Temperatur gehalten werden.

An der zweiten Station, bei der abgemessene Mengen einer Reagenzflüssigkeit den Proben in den Untersuchungsröhrchen 2 zugeführt werden sollen, befindet sich mindestens ein stationär angeordneter Becher 4, der in ein Bad 3 eintaucht und der nur eine vergleichsweise geringe Menge an Reagenzflüssigkeit aufnehmen kann. Wenn es möglich sein soll, mehrere verschiedene Reagenzflüssigkeiten selektiv den Untersuchungsröhrchen 2 zuzuführen, so muß eine entsprechende Anzahl von Reagenzbechern 4 nebeneinander in dem Bad 3 angeordnet sein, wobei jeder dieser Reagenzbecher 4 sein eigenes Reagenzversorgungssystem hat, welches in der gleichen Weise konstruiert ist, wie es im folgenden anhand des in Fig. 1 dargestellten Systems des Bechers 4 beschrieben wird. Zum Überführen bestimmter Mengen an Reagenzflüssigkeit von dem Becher 4 in das Untersuchungsröhrchen 2 ist eine automatisch arbeitende Pipette oder Meßpumpe 5 vorgesehen, die beispielsweise so konstruiert sein kann, wie dies in der Publikation EP-A-0 009 013 beschrieben ist. Die Meßpumpe ist in einer nicht im einzelnen dargestellten Art und Weise bewegbar zwischen einer Position oberhalb des Reagenzbechers 4 bzw. Positionen oberhalb jedes der verschiedenen Reagenzbecher, und einer Position, in der sie sich über dem Untersuchungsröhrchen 2 in dem Drehtisch 1 befindet, wenn das Untersuchungsröhrchen bei der Drehung des Tisches eine bestimmte Position eingenommen hat. In der Position oberhalb des Bechers 4 kann das Ansaugrohr 5a der Pumpe 5 in die in dem Becher befindliche Reagenzflüssigkeit hinein abgesenkt werden, um ein bestimmtes Volumen an Flüssigkeit anzusaugen. Wenn sich die Pumpe 5 oberhalb des Untersuchungsröhrchens 2 befindet, kann sie auf ein entsprechendes Signal hin ein bestimmtes Flüssigkeitsvolumen in das Röhrchen dispensieren, d. h. in genau bemessener Weise ausstoßen. Dadurch, daß der Reagenzbecher in ein Thermostatisierungsbad eingetaucht ist, wird sichergestellt, daß die von der Pumpe 5 in das Untersuchungsröhrchen 2 überführte Reagenzflüssigkeit die korrekte Temperatur hat.

Wie bereits zuvor erwähnt, kann der Reagenzbecher 4 nur eine verhältnismäßig geringe Menge an Reagenzflüssigkeit aufnehmen. In dem Maße, in dem Reagenzflüssigkeit aus dem Becher 4 von der Pumpe 5 entnommen wird, muß demzufolge auch neue Reagenzflüssigkeit in den Becher 4 nachgefüllt werden. Zu diesem Zweck befindet sich am Boden des Bechers 4 ein Anschluß für einen Schlauch 6, der den Becher 4 mit einer Vorratsflasche 7 für Reagenzflüssigkeit verbindet. Vorzugsweise ist die Flasche 7 in dem Analysegerät in einer Kammer 8 untergebracht, die bei einer kontrollierten niedrigen Temperatur gehalten werden kann, wie sie zum Lagern der Reagenzflüssigkeit über einen langen Zeitabschnitt geeignet ist. Der Schlauch 6 ist mit einer Ventileinheit 9 verbunden, die an dem Verschluß oder dem Stopfen 10 der Flasche 7 angebracht ist. Die Ventileinheit 9 schließt ein erstes Rückschlagventil 9a ein, über das der Schlauch 6 mit einem Ansaugschlauch 11 verbunden werden kann, der sich in die Reagenzflüssigkeit in der Flasche 7 hinein erstreckt. Das Rückschlagventil 9 ist so aufgebaut, daß es einen Flüssigkeitsfluß nur in einer Richtung zuläßt, nämlich von der Flasche 7 zu dem Schlauch 6 und weiter zu dem Becher 4. Um die Reagenzflüssigkeit aus der Flasche 7 durch den Schlauch 6 in den Becher 4 zu transportieren, wird in dem Becher 4 ein Unterdruck erzeugt, unter dessen Wirkung die Reagenzflüssigkeit aus der Flasche 7 durch den Schlauch 11, das Rückschlagventil 9a und den Schlauch 6 in den Becher 4 gesaugt wird. Der Unterdruck in dem Reagenzflüssigkeitsbecher 4 wird zur gleichen Zeit erzeugt, zu der die Pumpe 5 in den Becher 4 eintaucht und Reagenzflüssigkeit daraus entnimmt. Zu diesem Zweck weist die Pumpe 5 einen elastischen Balg 12 auf, der koaxial um das Ansaugrohr 5a der Pumpe 5 herum angeordnet ist und dessen unteres freies Ende 12a am Rand des Bechers 4 anliegt, wenn die Pumpe 5 in den Becher 4 abgesenkt wird. Der ringförmige Raum, der von dem Balg 12 umschlossen wird, steht mit einer (nur schematisch dargestellten) Einrichtung 13 in Verbindung, die dazu vorgesehen ist, einen Unterdruck im Innern des Balges 12 und somit auch in dem Becher 4 zu erzeugen, wenn die Pumpe 5 in den Becher abgesenkt ist und der Balg eine abdichtende Verbindung mit dem Rand des Reagenzbechers bildet. Um zu erreichen, daß eine ausreichende und abgemessene Menge an Reagenzflüssigkeit dem Becher 4 zugeführt wird, ist ein entsprechender Höhenstandsfühler 14 vorgesehen, der in der dargestellten Ausführungsform eine Fühlerelektrode 14a hat, die längs des Ansaugrohres 5a der Pumpe 5 dergestalt befestigt ist, daß die Elektrode 14a mit der Pumpe 5 zusammen in den Becher 4 abgesenkt wird. Der Höhenstandsfühler 14 ist über eine entsprechende Schaltung mit der Unterdruckquelle 13 verbunden, um diese auszuschalten, wenn die Flüssigkeit in dem Becher 4 einen Höhenstand erreicht hat, bei dem sie die Fühlerelektrode 14a erreicht, worauf der Unterdruck in dem Balg verschwindet und wobei der Balg stattdessen mit der Umgebungsatmosphäre verbunden wird. Auf diese Weise wird die Zuführung der Reagenzflüssigkeit aus der Flasche 7 in den Becher 4 automatisch unterbrochen, wenn die gewünschte Menge an Reagenzflüssigkeit in den Becher 4 eingelaufen ist. Durch das Rückschlagventil 9a wird verhindert, daß Reagenzflüssigkeit aus dem Becher 4 in die Flasche 7 zurückläuft. Man erkennt leicht, daß der Verschluß 10 der Flasche 7 so konstruiert sein muß, daß das Innere der Flasche 7 mit der umgebenden Atmosphäre in Verbindung steht. Der Schlauch, der zu dem Becher 4 führt, ist bevorzugt in dem Bad 3 dergestalt verlegt, beispielsweise in Form einer Spirale, daß die Durchflußzeit der Reagenzflüssigkeit durch den Schlauch lang genug ist, um diese im wesentlichen auf die Temperatur des Bandes zu erwärmen, bevor die Flüssigkeit den Becher 4 erreicht. Auf diese Weise ist es sichergestellt, daß die von der Pumpe 5 entnommene Flüssigkeit immer die gewünschte Temperatur hat.

Wie bereits zuvor erwähnt wurde, muß die Möglichkeit bestehen, den Reagenzbecher 4 und den Schlauch 6 von der gesamten darin befindlichen Reagenzflüssigkeit zu entleeren und den Becher 4 und den Schlauch 6 zu spülen, wenn das Analysegerät für eine längere Periode ausgeschaltet werden soll. Bei einer besonders bevorzugten Ausführungsform der Erfindung können der Reagenzbecher 4 und der Schlauch 6 automatisch entleert werden. Zu diesem Zweck ist die Unterdruckerzeugungseinrichtung 13 so konstruiert, daß sie wahlweise den Balg 12 auch mit einem Überdruck beaufschlagen kann. Wenn die Pumpe 5 in den Becher 4 bis zu der in der Fig. 1 dargestellten Stellung abgesenkt ist und der Balg 12 durch die Unterdruckerzeugungseinrichtung 13 mit einer Quelle für Überdruck verbunden wird, so wird die Reagenzflüssigkeit aus dem Becher 4 und der Leitung 6 durch ein weiteres Rückschlagventil 9b in der Ventileinheit 9 und eine Abflußleitung 15, die mit dem Rückschlagventil 9b verbunden ist, in einen geeigneten Abfluß 16 ausgetrieben. Das Rückschlagventil 9b ist so aufgebaut, daß es einen Flüssigkeitsstrom nur in einer Richtung, nämlich von dem Schlauch 6 zu der Abflußleitung 15 zuläßt. Es ist leicht zu erkennen, daß das Rückschlagventil 9a während dieses Entleerungsprozesses geschlossen bleibt, ähnlich wie das Rückschlagventil 9b geschlossen bleibt, wenn Reagenzflüssigkeit aus der Speicherflasche 7 in der zuvor beschriebenen Art und Weise in den Becher 4 angesaugt wird.

Nach dem Entleeren des Bechers 4 und des Schlauches 6 in der beschriebenen Art und Weise müssen der Becher 4 und der Schlauch 6 gespült werden. Dies läßt sich in automatischer Art und Weise verwirklichen, wenn in der Nachbarschaft des Bechers 4 ein weiterer, ähnlicher (nicht dargestellter) Becher angeordnet wird, welcher Wasser enthält. Bei dieser Ausführungsform ist die Meßpumpe auch dafür eingerichtet, in eine Position über dem Wasserbecher bewegt und in diesen abgesenkt zu werden, um Wasser daraus anzusaugen. Die Pumpe 5 kann daran anschließend zu dem Reagenzbecher 4 bewegt werden, um das Wasser in diesen hinein zu dispensieren. Danach wird die Unterdruckerzeugungseinrichtung 13 wiederum in die Betriebsweise gebracht, in der der Balg 12 mit einer Überdruckquelle verbunden ist, unter deren Einwirkung das Wasser aus dem Reagenzbecher durch den Schlauch 6 und das Rückschlagventil 9b in den Abfluß 16 gedrückt wird. Dadurch werden der Becher 4 und der Schlauch 6 wirksam gereinigt. Selbstverständlich kann dieser Vorgang je nach den gegebenen Notwendigkeiten mehrfach wiederholt werden.

Fig. 2 zeigt eine vorteilhafte Ausführungsform einer Ventileinheit 9, die in den Verschluß 10 der Flasche 7 eingebaut ist. Wie aus der Figur zu ersehen ist, schließt die Ventileinheit 9 ein Ventilgehäuse 17 ein. In dem Ventilgehäuse 17 ist eine Ventilkammer vorhanden, in der zwei stationäre, ringförmige Ventilsitze 18 und 19 konzentrisch zueinander und im wesentlichen in der gleichen Ebene angeordnet sind, wobei jedoch ihre Dichtflächen in entgegengesetzte Richtungen weisen. Der Ventilsitz 18 ist größer als der Ventilsitz 19. Zwischen den beiden Ventilsitzen 18 und 19 ist eine elastische Membran angeordnet, und zwar, wie aus der Figur zu ersehen ist, dergestalt, daß sie mit ihrem äußeren Umfang gegen den größeren Ventilsitz 18 anliegt, während ihr zentraler Bereich gegen den kleineren Ventilsitz 19 angedrückt ist. Durch die Membran 20 wird also der Innenraum des Ventilgehäuses 17 in eine erste Kammer 21 und in eine zweite Kammer 23 unterteilt. Die erste Kammer 21 ist über eine Bohrung 22 und einen Schlauchanschluß 22a mit einem Ansaugschlauch 11 verbunden, der sich in die Vorratsflasche 7 erstreckt. Die zweite Kammer 23 ist über eine Bohrung 24 und einen Schlauchanschluß 24a mit einem Schlauch 6 verbunden, der zu dem Reagenzbecher 4 führt. Die Ventilöffnung 19a, die von dem kleineren Ventilsitz 19 umschlossen wird, ist über eine Bohrung 25 und einen Schlauchanschluß 25a mit der Leitung 15 verbunden, die zu dem Abfluß 16 führt. Die Membran 20 bildet zusammen mit dem größeren Ventilsitz 18 das in Fig. 1 dargestellte Rückschlagventil 9a, während die gleiche Membran zusammen mit dem Ventilsitz 19 das Rückschlagventil 9b gemäß Fig. 1 bildet. Der in der Ventilkammer 21, die mit dem Inneren der Flasche 7 verbunden ist, herrschende Druck ist normaler Atmosphärendruck. Ebenso herrscht in der Leitung 25 des Ventilgehäuses 17, die mit der Abflußleitung 15 verbunden ist, atmosphärischer Druck. Wenn in der Bohrung 24 in der zuvor beschriebenen Art und Weise ein Unterdruck erzeugt wird, so hebt die Membran 20 folglich vom Ventilsitz 18 ab, so daß eine Reagenzflüssigkeit von der Flasche 7 zu dem Reagenzbecher 4 fließen kann. Wenn andererseits die Bohrung 24 in dem Ventilgehäuse 17 mit einer Überdruckquelle verbunden wird, wie dies für den Vorgang des Entleerens und Reinigens des Reagenzbechers 4 und des Schlauches 6 beschrieben wurde, so hebt die Membran 20 von dem Ventilsitz 19 ab, so daß Reagenzflüssigkeit oder Wasser aus dem Becher 4 durch den Schlauch 6 in die Leitung 15 und damit in den Abfluß 16 gedrückt werden kann. Diese Ausführungsform einer Ventileinheit, die als doppelt wirkendes Rückschlagventil arbeitet, zeichnet sich besonders vorteilhaft dadurch aus, daß sie sehr einfach und zuverlässig ist und so ausgestaltet werden kann, daß sie schon bei sehr kleinen Druckdifferenzen, beispielsweise Druckdifferenzen von wenigen zehntel Bar, öffnet, wobei gleichzeitig sichergestellt ist, daß das zu diesem Zeitpunkt geschlossene Ventil vollständig dichtet.

Offensichtlich kann eine erfindungsgemäße Einrichtung in vielerlei Art und Weise unterschiedlich von dem beschriebenen und zeichnerisch dargestellten Ausführungsbeispiel ausgeführt werden. Beispielsweise können die Meßpumpe, der Höhenstandsfühler, die Einrichtung zum Anschließen des Reagenzbechers an eine Quelle für Unterdruck oder Überdruck und die Rückschlagventile auch anders gestaltet sein. Unter anderem müssen die Ventile nicht notwendigerweise an dem Verschluß der Flasche 7 befestigt sein. Es ist auch nicht unbedingt notwendig, daß der Höhenstandsfühler an der Pumpe 5 befestigt ist und somit deren Bewegungen mitmacht, obwohl diese Ausführungsform den besonderen Vorteil hat, daß nicht für jeden Becher ein besonderer Höhenstandsfühler notwendig ist. Aus dem gleichen Grund ist es vorteilhaft, wenn die Unterdruck- und Überdruckquelle in der zuvor beschriebenen Art angeordnet sind, obwohl auch andere Ausführungsformen verwendet werden können. Die erfindungsgemäße Einrichtung zum Zuführen genau bemessener Reagenzmengen zu einem oder mehreren Untersuchungsröhrchen kann selbstverständlich auch im Zusammenhang mit anderen Analysegeräten als dem hier beschriebenen vorteilhaft verwendet werden.

**Patentansprüche**

1. Vorrichtung zur Zuführung abgemessener Mengen eines flüssigen Reagenz zu einem offenen Untersuchungsröhrchen (2) in einem klinischen Analysegerät, mit einem offenen Becher (4) für Reagenzflüssigkeit, und einer Pumpe, (5), die dazu eingerichtet ist, eine Flüssigkeit in ein Ansaugrohr (5a) anzusaugen und ein bestimmtes Flüssigkeitsvolumen aus dem Ansaugrohr (5a) wieder zu dispensieren, wobei die Pumpe (5) zwischen einer ersten Position über dem Reagenzbecher (4) und einer zweiten Position über dem Untersuchungsröhrchen (2) bewegbar und absenkbar ausgeführt ist, um in der ersten Position Reagenzflüssigkeit aus dem Reagenzbecher (4) anzusaugen und in der zweiten Position Reagenzflüssigkeit in das Untersuchungsröhrchen (2) zu dispensieren, gekennzeichnet durch ein Vorratsgefäß (7) für Reagenzflüssigkeit, welches mit dem Reagenzbecher (4) über eine Leitung (6, 11) verbunden ist, deren eines Ende (11) in die Flüssigkeit in dem Vorratsgefäß (7) ragt und deren anderes Ende (6) sich in den Becher (4) öffnet und die ein Rückschlagventil (9a) enthält, das einen Flüssigkeitsstrom nur in Richtung auf den Reagenzbecher (4) zuläßt, eine einen Balg (12) und eine Unterdruckquelle (13) aufweisende Einrichtung (12, 13) zur Erzeugung eines Unterdruckes in dem Reagenzbecher (4) zum Ansaugen von Reagenzflüssigkeit aus dem Vorratsgefäß (7) durch die Leitung (6, 11) in den Reagenzbecher (4) hinein, und einen Höhenstandsfühler (14) zum Feststellen des Flüssigkeitsstandes in dem Becher (4), wobei der Balg (12) an der Pumpe (5), das Ansaugrohr (5a) koaxial umgebend, derart angeordnet ist, daß sich ein dichter Anschluß an den Rand des Reagenzbechers (4) ergibt, wenn die Pumpe (5) mit ihrem Ansaugrohr (5a) in den Reagenzbecher (4) abgesenkt ist, und das Innere des Balgs mit der Unterdruckquelle (13) in Verbindung steht, die durch den Höhenstandsfühler (14) derart steuerbar ist, daß sie bei der in den Reagenzbecher (4) abgesenkten Lage der Pumpe (5) eingeschaltet ist und einen Unterdruck in den Reagenzbecher (4) erzeugt, so lange der Flüssigkeitsstand in dem Reagenzbecher einen bestimmten Höchststand unterschreitet.

2. Vorrichtung nach Anspruch 1, dadurch gekennzeichnet, daß der Höhenstandsfühler (14) ein Fühlerelement (14a) einschließt, das an der Pumpe (5) so befestigt ist, daß es zusammen mit Ansaugrohr (5) in den Reagenzbecher (4) absenkbar ist.

3. Vorrichtung nach einem der Ansprüche 1 und 2, dadurch gekennzeichnet, daß sie einen zusätzlichen Becher für Wasser einschließt, daß die Pumpe (5) auch in eine dritte Position über dem Wasserbecher bewegbar und in diesen hinein absenkbar ist, um Wasser daraus anzusaugen, und daran anschließend in die erste Position über dem Reagenzbecher (4) bewegbar ist, um Wasser in diesen zu dispensieren, daß auch eine Überdruckquelle mit dem Inneren des Balgs (12) verbindbar ist, um bei der in den Reagenzbecher abgesenkten Lage der Pumpe (5) einen Überdruck in dem Reagenzbecher (4) zu erzeugen, und daß die sich in den Reagenzbecher (4) öffnende Leitung (6) über ein zweites Rückschlagventil (9b), das einen Flüssigkeitsstrom nur in der Richtung von dem Reagenzbecher (4) weg zuläßt, und eine Leitung (15) mit einem Abfluß (16) verbunden ist.

4. Vorrichtung nach einem der Ansprüche 1 bis 3, bei welcher sich der Reagenzbecher (4) in einem Thermostatisierungsbad (3) befindet, dadurch gekennzeichnet, daß das Reagenzvorratsgefäß (7) außerhalb des Thermostatisierungsbades (3) angeordnet ist und daß die Leitung (6) zwischen dem Reagenzvorratsgefäß (7) und dem Reagenzbecher (4) mindestens über eine solche Länge durch das Bad (3) führt, daß Reagenzflüssigkeit, die von dem Vorratsgefäß (7) zu dem Reagenzbecher (4) fließt, im wesentlichen auf die Temperatur des Thermostatisierungsbades (3) erwärmt ist, bevor sie den Reagenzbecher (4) erreicht.

5. Vorrichtung nach Anspruch 3, dadurch gekennzeichnet, daß die beiden Rückschlagventile (9a, 9b) Teile einer Ventileinheit (9) sind, die ein Ventilgehäuse (17) mit einer Ventilkammer (21, 23) aufweist, in welcher zwei stationäre ringförmige Ventilsitze (18, 19) konzentrisch zueinander und in entgegengesetzte Richtungen weisend angeordnet sind, wobei eine elastische Membran (20) so zwischen den Ventilsitzen (18, 19) angeordnet ist, daß der periphere Randteil der Membran (20) gegen den größeren Ventilsitz (18) und der mehr zentrale Teil der Membran (20) gegen den kleineren Ventilsitz (19) anliegt, und die Membran (20) die Ventilkammer in zwei Teile (21, 23) teilt, von denen der eine Teil (21) mit dem größeren Ventilsitz (18) mit dem Reagenzvorratsgefäß (7) und der andere Teil (23) mit dem kleineren Ventilsitz (19) mit der Leitung zu dem Reagenzbecher (4) verbunden ist, während die Ventilöffnung (19a), die von dem kleineren Ventilsitz (19) umschlossen ist, mit der Leitung (15) zu dem Abfluß (16) in Verbindung steht.

## Claims

1. An arrangement for supplying measured quantities of a reagent liquid to an open test-tube (2) in a clinical analytical apparatus, having an open beaker (4) for reagent liquid and a pump (5) which is so arranged as to draw liquid into a suction tube and to dispense a specific volume of liquid from the suction tube, in which the pump (5) can be moved between an initial position above the reagent beaker (4) and a second position over the test-tube (4) and can be lowered so as to draw up reagent liquid from the reagent beaker (4) when in the first position and to dispense reagent liquid into the test-tube (2) when in the second position, characterized by a supply tank (7) for reagent liquid which is connected to the reagent beaker (4) by a tube (6, 11) one end of which (11) is immersed in the liquid in the supply tank (7) and the other end of which (6) opens into the beaker (4) and which contains a one-way valve (9a) which only allows the liquid to flow in the direction of the reagent beaker (4), an arrangement (12, 13) containing bellows (12) and a vacuum source (13) for producing a vacuum in the reagent beaker (4) in order to draw the reagent liquid from the supply tank (7) through the tube (6, 11) into the reagent beaker (4), and a level guage (14) to indicate the level of the liquid in the beaker (4), in which the bellows (12) on the pump (5) surround the suction tube (5a) coaxially, and are arranged so that a sealed connection is made with the rim of the reagent beaker when the pump (5) with its suction tube (5a) is lowered into the reagent beaker (4), and the interior of the bellows is in connection with the vacuum source (13) which can be controlled by the level gauge in such a way that it is switched on when the pump (5) is in the lowered position in the beaker and a vacuum is created in the reagent beaker (4) so long as the level of the liquid in the reagent beaker does not reach a certain level.

2. An arrangement according to claim 1, characterized in that the level gauge (14) includes a probe (14a) which is attached to the pump (5) in such a way that it can be lowered into the reagent beaker together with the suction tube (5).

3. An arrangement according to claim 1 or claim 2, characterized in that it includes an additional beaker for water, and in that the pump (5) can also be moved into a third position over the water beaker and can be lowered into it, in order to draw up water from it and can then be moved into the first position over the reagent beaker (4) in order to dispense water into it; and also in that a pressure source can be connected to the inside of the bellows (12) in order to produce pressure in the reagent beaker (4) when the pump (5) is lowered into the reagent beaker; and that the tube (6) which opens into the reagent beaker (4) is connected to an outlet (16) through another oneway valve (9b) which only allows liquid to flow in a direction away from the reagent beaker (4).

4. An arrangement according to any one of claims 1 to 3, in which the reagent beaker (4) is located in a heat-exchanger (3) characterized in that the reagent supply tank is situated outside the heat-exchanger and the tube (6) between the reagent supply tank (7) and the reagent beaker (4) is routed for a sufficient length through the exchanger (3) so that the reagent liquid flowing from the supply tank (7) to the reagent beaker (4) is more or less warmed to the temperature of the heatexchanger (3) before reaching the reagent beaker (4).

5. An arrangement according to claim 3, characterized in that both of the one-way valves (9a, 9b) are part of a valve unit (9) having a valve housing (17) with a valve chamber (21, 23) in which two stationary circular valve seatings (18, 19) are arranged concentrically with and in opposing directions to each other, whereby an elastic membrane (20) is arranged between the valve seatings (18, 19) in such a way that the circumference of the membrane (20) lies against the larger valve seat (18) and the central portion of the membrane (20) lies against the smaller valve seating (19) and the membrane (20) divides the valve chamber into two parts, of which one part (21) with the larger valve seating (18) is connected with the reagent supply tank (17) and the other part (23) with the smaller valve seating (19) is connected to the tube leading to the reagent beaker (4), whilst the valve opening (19a) which is surrounded by the smaller valve seating (19) is in connection with the tube (15) leading to the outlet (16).

## Revendications

1. Dispositif permettant d'alimenter en quantités dosées d'un réactif liquide une éprouvette ouverte (2) dans un appareil d'analyse directe, comportant un becher (4) également ouvert pour le réactif, ainsi qu'une pompe (5) prévue pour aspirer le liquide dans un tube d'admission (5a) et en dverser un certain volume, cette même pompe (5) étant mobile et abaissable entre une première position au-dessus du becher (4) et une seconde au-dessus de l'éprouvette (2), ces deux positions correspondant respectivement à l'aspiration du réactif contenu dans le becher (4) et à son revoi dans l'éprouvette (2), caractérisé par une bonbonne (7) reliée au becher (4) par l'intermédiaire d'une conduite (6, 11), dont une extrémité (11) plonge dans le liquide réactif de la bonbonne (7) , l'autre (6) débouchant dans le becher (4), et sur laquelle une soupape de retenue (9a) laisse passer le réactif dans le seul sens du becher (4), par un système (12, 13) composé d'un soufflet (12) et d'un générateur de vide (13), permettant de créer dans le becher (4) un vide partiel pour l'aspiration du réactif contenu dans la bonbonne (7) et son transfert dans le becher (4) par la conduite précitée (6, 11), ainsi que par un capteur (14) du niveau de liquide dans le becher (4), le montage du soufflet (12) sur la pompe (5), périphérique et coaxial au tube d'admission (5a), permettant d'obtenir un raccordement étanche avec le rebord du becher (4), lorsque la pompe (5) et le tube (5a) sont abaissés sur ce dernier, la jonction entre l'intérieur du soufflet et la source de dépression (13) commandée par le capteur (14) étant par ailleurs telle, que le générateur, commuté lorsque la pompe (5) est abaissée sur le becher (4), génère dans ce dernier un vide partiel, tant que le liquide n'y dépasse pas un certain niveau maximum.

2. Dispositif selon la revendication 1, caractérisé en ce que le capteur de niveau (14) comporte un élément sensitif (14a), fixé sur la pompe (5) de manière à être abaissé avec le tube d'admission (5a) dans le becher (4).

3. Dispositif selon une quelconque des revendications 1 et 2, caractérisé en ce qu'un becher supplémentaire est prévu pour recevoir de l'eau, en ce que la pompe (5), peut être amenée dans une troisième position au-dessus de ce becher, pour y être abaissée et en aspirer le contenu, puis être ramenée dans sa première positon au-dessus du becher (4), afin d'y déverser l'eau pompée, en ce qu'une source peut être raccordée à l'espace interne du soufflet (12), afin de générer une surpression dans le becher (4), lorsque la pompe (5) y est abaissée, et en ce que la conduite (6) débouchant dans le becher (4) est reliée à un trop-plein (16) par l'intermédiaire d'un tuyau (15) et d'une seconde soupape de retenue (9b), qui ne laisse passer que le liquide provenant du becher (4).

4. Dispositif selon une quelconque des revendications 1 à 3, dans lequel le becher (4) est plongé dans un bain thermostatique (3), caractérisé en ce que la bonbonne (7) est placée en dehors du bain (3), et en ce que la conduite (6), reliant la bonbonne (7) au becher (4), passe dans le bain (3) sur une longueur minimale telle, que le réactif, s'écoulant de la bonbonne (7) dans le becher (4), est essentiellement porté à la température du bain (3), avant de parvenir dans le becher (4).

5. Dispositif selon la revendication 3, caractérisé en ce que les deux soupapes de retenue (9a, 9b) font partie d'une unité de fermeture (9), présentant une boîte (17) avec une chambre (21, 23), dans laquelle sont montés deux sièges de soupape (18, 19) annulaires, concentriques et fixes, et dont les surfaces de contact sont orientées en sens inverse, une membrane élastique (20) étant prévue entre ces deux sièges (18, 19), de manière à ce que son rebord externe s'applique contre le siège (18) le plus important et sa partie centrale contre le siège (19) le plus petit, cette même membrane (20) divisant la chambre en deux parties (21, 23), dont la première (21) avec le siège (18) est reliée à la bonbonne (7) et la seconde (23) avec le siège (19) à la conduite débouchant dans le becher (4), l'ouverture (19a), enveloppée par le siège (19), étant elle-même raccordée au tuyau (15) qui débouche dans le trop-plein (16).

*Fig.1*

*Fig.2*